Europäisches Patentamt

European Patent Office

Office européen des brevets

(11) Publication number: **0 146 247**
A2

# (12) EUROPEAN PATENT APPLICATION

(21) Application number: 84307562.3

(22) Date of filing: 02.11.84

(51) Int. Cl.⁴: **F 21 V 23/00**, F 21 S 13/00

(30) Priority: 20.12.83 JP 196640/83

(43) Date of publication of application: 26.06.85
Bulletin 85/26

(84) Designated Contracting States: AT BE CH DE FR GB IT
LI LU NL SE

(71) Applicant: HOLSE CO. LTD.,
12-29 Higashi-Hagoromo 3-chome, Takaishi City Osaka
Prefecture (JP)

(72) Inventor: Ogura, Manabu,
12-28 Higashi-Hagoromo 3-chome, Takaishi City Osaka
Pref. (JP)

(74) Representative: Evans, David Charles et al, F.J.
CLEVELAND & COMPANY 40-43, Chancery Lane,
London, WC2A 1JQ (GB)

(54) Lighting apparatus.

(57) Lighting apparatus comprises a rod like member such as
a candle having a light source, typically a flame or bulb at an
upper end thereof. An optical fibre extends along the rod like
member with its upper end juxtaposed the light source and the
lower end in operative relationship with a photosensor which
may act as a switch. In a specific embodiment the photosensor
is connected with a sound reproductive system so that when
the light source is illuminated, the luminous flux transmitted by
the optical fibre is above the threshold which triggers the
photosensor and renders the sound reproductive system
operative.

EP 0 146 247 A2

ACTORUM AG

- 1 -

# LIGHTING APPARATUS

## DESCRIPTION

The present invention relates to lighting apparatus and has particular reference to lighting apparatus which provides automatic switching or indication in response to light originating from said apparatus.

According to the present invention there is provided lighting apparatus comprising a rod like member, a light source at one end of said rod-like member, an optical fibre extending along said rod-like member with one end of said fibre juxtaposed said light source, and a photo sensor in operative relationship to the other end of said optical fibre, the arrangement being such that light from said source is transmitted by said optical fibre to said photo sensor which changes from a disenabled state to an enabled state when the light intensity transmitted by said optical fibre reaches or exceeds a predetermined flux level. The photo sensor may be associated with an electrically operated sound reproduction means whereby when the light source is transmitting a flux via the optical fibre to the photosensor above said predetermined level, the sound reproduction means is rendered

- 2 -

operative.

The rod-like member may be in a form of a candle and the optical fibre may be embedded therein. The light source may be an electric bulb or in the alternative, may be a flame. In a particular embodiment of the present invention the rod-like member is a candle having a wick surrounded by wax, said wick extending longitudinally of the candle and the optical fibre is a consumable optical fibre embedded in the wax thereof. The consumable optical fibre may be formed by a plastics material.

In a specific embodiment of the present invention the apparatus may be in the form of a candle stick having a base supporting an upstanding candle characterised in that the base includes battery means, sound reproductive means, a photosensor and a speaker whereby when the wick of the candle is lit, light is transmitted via the optical fibre to the photosensor thereby rendering the sound reproductive means operative and music or other sound is caused to be emitted by said speaker.

Following is a description by way of example only and with reference to the accompanying drawings of methods of carrying the invention into effect.

In the drawings:-

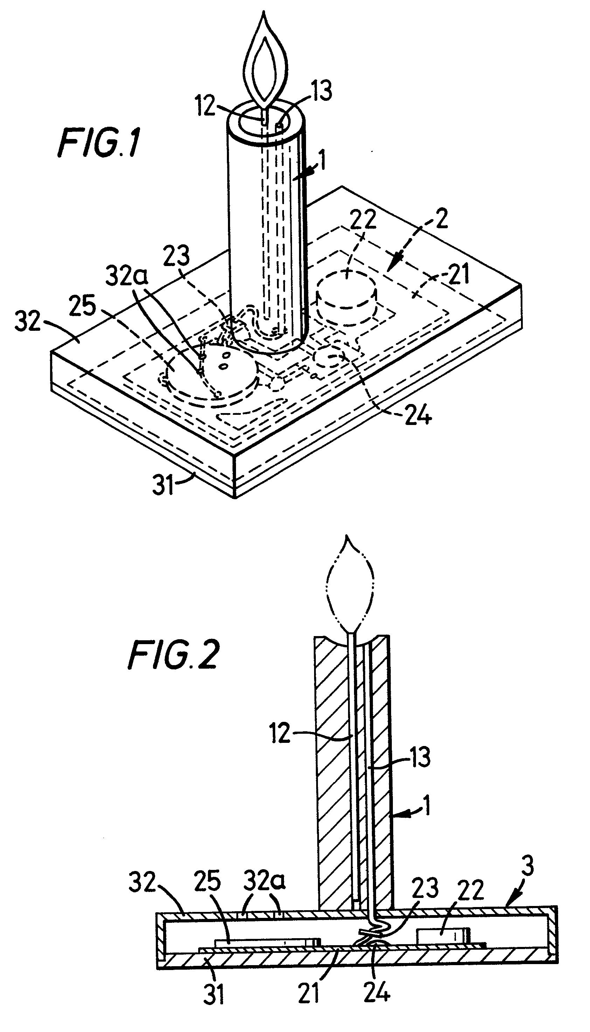

Figure 1 is a perspective view of a candle in accordance with the present invention.

- 3 -

Figure 2 is vertical section of the apparatus of Figure 1.

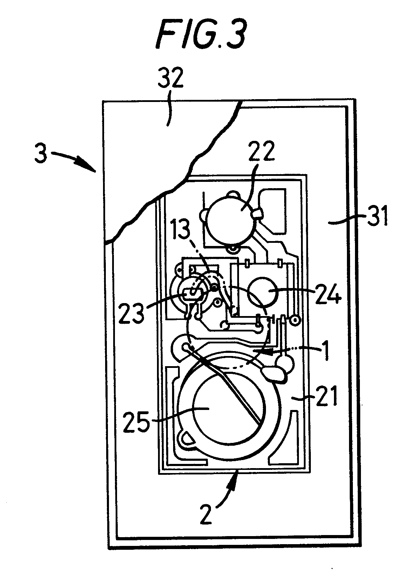

Figure 3 is a plan view in section through the face of apparatus of Figure 2.

As seen from these drawings, the rod 1 is set upon the candlestick 3; a cylindrical candle having its candlewick 12 is in the centre thereof; by lighting up the top of the candlewick 12, the surroundings get light; a simple type of an optical fiber 13 such as plastic fibre or the like runs through the candle 1 leaving a space of approximately 2 milimetres from the candlewick but is substantially parallel therewith and the top end of the optical fibre somewhat popped out of the top of the candle 1. The foot of the optical fibre extends from the candle 1 to the inner part of the candlestick 3. The candlestick 3 consists of a base plate 31 on which melody module 2 is laid and its cover 32 which is painted in black inside. The melody module 2 is arranged an electric batter 22, a photo-sensor 23, melody IC 24, a piezoelectric buzzer, etc., on the board and when the photo sensor 23 detects light exceeding 200 luxes, then the built-in switch starts working and a prescribed melody begins to play from the sound body 25 during a fixed amount of time. As described above, the foot part of the optical fibre 13 runs through the candlestick 3 through the hole made in the cover 32; the end of the optical fibre is set up against the detecting face of the photo sensor 23. Some space is left between the sound body 25 and the cover 32 and so the sound of melody is transmitted up by resonanting within the space; furthermore, certain numbers of small holes 32a made in the cover plate 32 let the melody sound outside of the candlestick 3 clearly.

Using the candle devised as stated hereinabove, when it is lit, the candle 1 starts shining in the surroundings and, as soon as the illuminance over 200 luxes is given to the tip of the optical fibre 13 near by the light source 12, it will reach the surface of the photo sensor 23. Detecting the light, the photo sensor 23 triggers the switch which causes the melody IC 24 to play a prescribed melody from within the sound body 25 during a fixed amount of time. The melody can sound outside through the small holes 32a made in the cover plate 32 of the candlestick 3. The melody module 2 can, however, play the melody during the fixed amount of time only when it detects the light therefrom, but does not do so after the fixed amount if time has elapsed. In order to restart the melody, it is required to extinguish the light for a short time; in the case of the candle in this device, by reducing air, etc. to the flame of the candle when lit, thus reducing the transmitted flux to less than 200 luxes. When the photosensor receives again a flux greater than 200 luxe, i.e. when to the former state and the tip of the optical fibre 13 resumes to shine over 200 luxes; consequently, the photo sensor 23 begins to work switch and the sounding body 25 begins to play a prescribed melody over again. The candle 1 gets short as its wick 12 burns; since the optical fibre 23 is also melted by heat caused by the burning of the candlewick 12, shortening of the candle 1 coincides with that of the optical fibre and, in so doing, the location between the top of the candlewick 12 and that of the optical fibre 13 remains unchanged; detecting the light is not prevented at all because the tip of the optical fibre 13 always juts out of the top of the candle 1.

In addition, the above practical application may be carried out using an electric lamp with an electric bulb at the end. In such case, the power source for lighting the electric bulb may be structured so as to be used in common with that for working the melody IC and the structure can be modified as follows: instead of the melody being played during a fixed amount of time, the melody can continue for a long time when the photosensor detects light.

The device is, as stated in detail hereinabove, provided with

a)   a supporting stand on which a photo sensor, a melody IC and a sounding body are set thereon so as to start playing a prescribed melody when the photo sensor detects light, and

b)   a rod prepared on the supporting stand, and

c)   an optical fibre so arranged as to be faced, at one end, against the light source and, at the other, against the light sensor's sensitive surface.

Consequently, one can hear a pleasant melody playing and enjoy a very pleasant mood when switched on a light.

- 7 -

## CLAIMS

1. Lighting apparatus comprising a rod-like member and a light source at one end of said rod-like member, characterised in that an optical fibre 13 extends along said rod-like member with one end of said fibre juxtaposed said light source, and in that a photo sensor 23 is disposed in operative relation with the other end of said optical fibre, whereby light from said source is transmitted by said optical fibre to said photo sensor which is caused to change from a disenabled state to an enabled state when the light intensity transmitted by said optical fibre exceeds a predetermined flux level.

2. Apparatus as claimed in claim 1 characterised in that the photo sensor 23 is associated with electrically operated sound reproduction means 22, 25 whereby when the light source is transmitting a flux via the optical fibre 13 to the photosensor 23 above said predetermined level the sound reproduction means is rendered operative.

3. Apparatus as claimed in claim 1 or claim 2 characterised in that said rod-like member 1 is in the form of a candle and the optical fibre 13 is embedded therein.

4. Apparatus as claimed in any preceding claim characterised in that the light source is an electric light bulb.

5. Apparatus as claimed in any one of claims 1 to 3 characterised in that the light source is a flame.

6. Apparatus as claimed in any one of claims 1 to 3 and 5 characterised in that said rod-like member is a candle having a wick 12 extending longitudinally thereof and a consumable optical fibre 13 embedded in the wax thereof.

7. Apparatus as claimed in claim 6 wherein the consumable optical fibre 13 is formed from a plastics material.

8. Apparatus as claimed in any preceding claim in the form of a candlestick having a base 3 supporting an upstanding candle 1, characterised in that said base 3 includes battery means 22, sound reproductive means 24, photosensor 23 and speaker 25, whereby when the wick 12 is lit light is transmitted via optical fibre 13 to photosensor 23 thereby rendering sound reproductive means 24 operative and music or other sound to be emitted by speaker 25.

FIG.1

FIG.2

## FIG.3